# EUROPÄISCHE PATENTANMELDUNG

(11) **EP 0 624 742 A1**
(43) Veröffentlichungstag der Anmeldung: **17.11.1994**
(21) Anmeldenummer: 94106396.8
(22) Anmeldetag: 25.04.1994
(51) Int. Cl.: F16J 15/40

(54) **Wellendurchführung mit Sperrflüssigkeitsabdichtung**

(30) Priorität: 08.05.1993 DE 9307024 U
(71) Anmelder: MASCHINENFABRIK HENNECKE GmbH, D-51379 Leverkusen (DE)
(72) Erfinder: Sulzbach, Hans-Michael, D-53639 Königswinter (DE); Duschanek, Helmut, D-53639 Königswinter (DE); Althausen, Ferdinand, D-53819 Neunkirchen (DE); Büchel, Bodo, D-53639 Königswinter (DE)
(74) Vertreter: Drope, Rüdiger, Dr.

(57) **Zusammenfassung**

Schadhafte Wellendurchführungen, beispielsweise von Flüssigkeitspumpen, bei denen zwischen zwei Wellendichtungen (36, 37) eine Kammer (38) mit Sperrflüssigkeit angeordnet ist, welche mit einem Vorratsbehälter (40) in Verbindung steht, lassen sich durch Alarmauslösung sofort feststellen, indem die Oberfläche (44) der auf einen Sollfüllstand eingestellten Sperrflüssigkeit (41) im Vorratsbehälter (40) - vorzugsweise unter Zwischenlage einer bewegbaren, hermetisch abdichtenden Membran (54) - durch einen Kolben (46) abgedeckt ist, welcher bei Veränderung des Füllstandes auf einen außerhalb des Vorratsbehälters (40) angeordneten Signalgeber (42) einwirkt.

## Beschreibung

Die Erfindung betrifft eine Wellendurchführung, bestehend aus zwei in einer gehäuseartigen, die Welle umgebende Kammer angeordneten Wellendichtungen, zwischen denen ein mit Sperrflüssigkeit gefüllter Raum belassen ist, von welchem eine Verbindungsleitung zu einem über dem Niveau der Kammer angeordneten Vorratsbehälter führt.

Häufig müssen Wellendurchführungen gegen kritische Medien abgedichtet werden, wie beispielsweise bei Pumpen, die bei der Herstellung von Polyurethan die Reaktionskomponenten Polyol und Isocyanat fördern müssen. Die Sperrflüssigkeit soll dabei den Austritt des kritischen Mediums ins Freie verhindern. Außerdem besitzt der Vorratsbehälter in der Regel eine durchsichtige Wandung, damit man den Füllstand erkennen kann. Ein plötzliches Ansteigen oder Sinken des Füllstandes deutet auf eine schadhafte Dichtung hin. Solche Vorratsbehälter können aber nicht dauernd beobachtet werden, und nicht rechtzeitig erkannte Leckagen können erhebliche Schäden verursachen.

Es besteht die Aufgabe, eine Wellendurchführung der eingangs genannten Art zu schaffen, bei welcher ein Dichtungsschaden sofort feststellbar ist.

Diese Aufgabe wird dadurch gelöst, daß die Oberfläche der im Vorratsbehälter enthaltenen Sperrflüssigkeit durch einen Kolben abgedeckt ist, welcher außerhalb des Vorratsbehälters mit einem zugeordneten Signalgeber zusammenwirkt, wobei der Sollfüllstand der Sperrflüssigkeit auf den Signalgeber abgestimmt ist.

Solche auf dem Markt erhältlichen Signalgeber besitzen in der Regel einen oberen und einen unteren Grenzkontakt, welche mit einem von dem Kolben direkt oder über einen Stößel betätigbaren Schließkontakt zusammenarbeiten. Bei Betätigung des Schließkontaktes wird ein Stromkreis geschlossen, und je nach Bauart des Signalgebers gibt er einen optischen und/oder akustischen Alarm. Es versteht sich, daß der Kolben gegen die Wandung des Vorratsbehälters abdichten muß und daß zwischen dem Kolben und der Oberfläche der Sperrflüssigkeit keine Luft vorhanden sein darf, weil diese durch ihre Kompressibilität die Signalgabe verfälschen würde. Steigen und Sinken des Füllstandes zeigen eine Undichtigkeit im Vorratsbehälter an. Normalerweise steht die Sperrflüssigkeit unter Atmosphärendruck.

Gemäß einer besonderen Ausführungsform der neuen Wellendurchführung ist zwischen Kolben und Oberfläche der Sperrflüssigkeit eine gegen die Wandung des Vorratsbehälters hermetisch abdichtende, durch Veränderung des Füllstandes bewegbare Membran angeordnet, auf der der Kolben ruht.

Dies hat den Vorteil, daß das Sperrflüssigkeitssystem hermetisch abgedichtet ist, so daß auch Leckagen zwischen dem Kolben und der Wandung des Vorratsbehälters ausgeschlossen sind.

Die Membran besteht beispielsweise aus einem elastischen Polyurethan oder aus Fluorkautschuk und ist vorzugsweise zwischen einem Bodenteil und einem Deckelteil des Vorratsbehälters abdichtend eingespannt. Um die Beweglichkeit in senkrechter Richtung zu ermöglichen, ohne daß die Membran gedehnt werden muß, ist der Durchmesser des Kolbens geringer als der Innendurchmesser des Vorratsbehälters, und die Membran bildet zwischen dem Rand des Kolbens und der Innenwandung des Behälters eine Falte, deren Höhe sich mit der Veränderung des Füllstandes ändert. Es versteht sich, daß bei dieser Ausführungsform der Vorratsbehälter bei Sollfüllstand nicht voll gefüllt sein darf, sondern daß über der Sperrflüssigkeit zumindest so viel Raum bzw. freie Höhe vorhanden sein muß, daß bei steigendem Füllstand der obere Grenzkontakt ansprechen kann.

Vorzugsweise sind Kolben und Membran fest verbunden.

Auf diese Weise ist sichergestellt, daß sich Membran und Kolben immer gleichzeitig dem aktuellen Füllstand anpassen.

In der Zeichnung ist die neue Wellendurchführung in zwei Ausführungsbeispielen rein schematisch im Schnitt dargestellt und nachstehend näher erläutert. Es zeigen:
Fig. 1 eine erste Ausführungsform und
Fig. 2 eine zweite Ausführungsform.

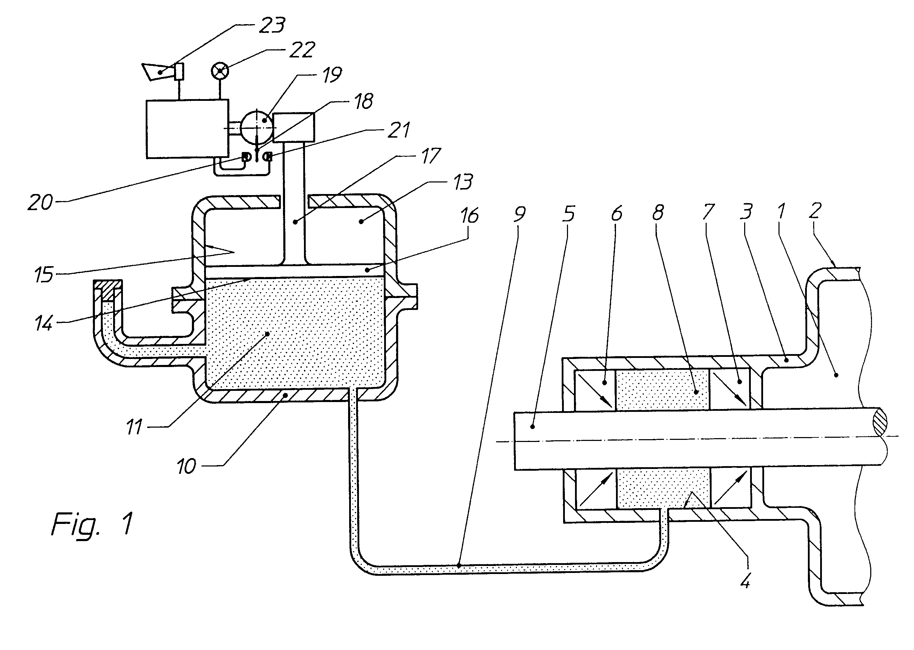

In Fig. 1 besteht die gegen den Innenraum 1 einer Pumpe 2 abdichtende Wellendurchführung aus einer im Pumpengehäuse 3 angeordneten Kammer 4, in welcher zwei eine Welle 5 umgebende Lippendichtungen 6, 7 angeordnet sind, zwischen denen ein mit Sperrflüssigkeit gefüllter Raum 8 belassen ist. Dieser ist über eine Verbindungsleitung 9 mit einem über dem Niveau der Kammer 4 angeordneten Vorratsbehälter 10 verbunden. Im Vorratsbehälter 10 befindet sich Sperrflüssigkeit 11, deren Sollfüllstand auf einen Signalgeber 12 abgestimmt ist. Über der Sperrflüssigkeit 11 befindet sich ein freier Raum 13, in welchem sich ein die Oberfläche 14 der Sperrflüssigkeit 11 abdeckender und gegen die Wandung 15 gleitfähig abdichtender Kolben 16 befindet. Der Kolben 16 ist mit einem aus dem Vorratsbehälter 10 herausführenden Stößel 17 ausgestattet, welcher mit einem einen Schließkontakt 18 aufweisenden Radchen 19 des Signalgebers 12 zusammenwirkt, welcher mit dem Schließkontakt 18 betätigbare Grenzkontakte 20, 21 aufweist. Der Sollfüllstand der Sperrflüssigkeit 11 im Vorratsbehälter 10 ist so eingestellt, daß der Schließkontakt 18 von den beiden Grenzkontakten 20, 21 gleichen Abstand besitzt. Bei Absinken des Füllstandes wird der Grenzkontakt 20 und bei Steigen des Füllstandes der Grenzkontakt 21 geschlossen, wodurch eine Alarmlampe 22 und eine akustische Warneinrichtung 23 betätigt werden.

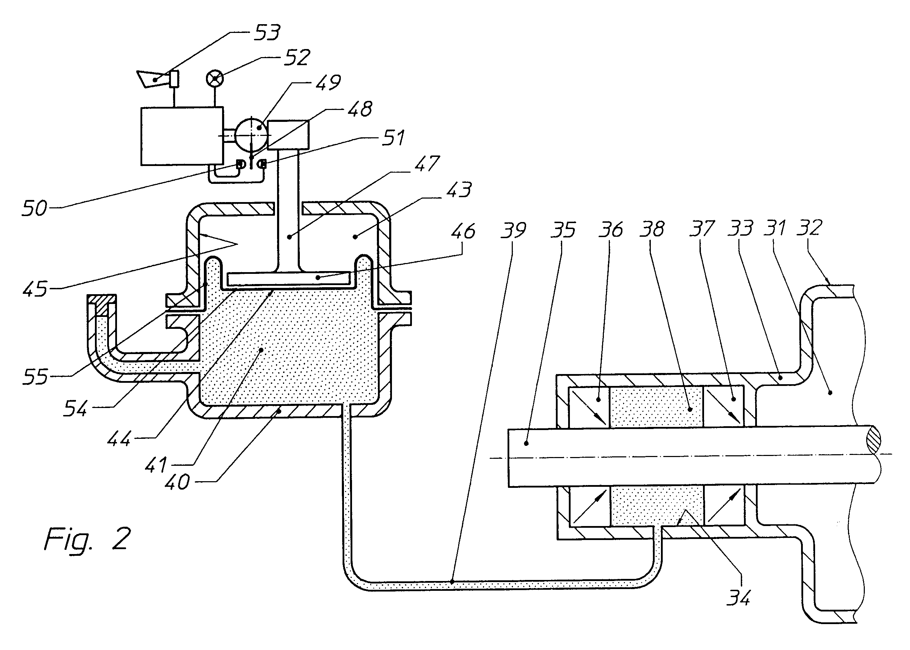

In Fig. 2 besteht die gegen den Innenraum 31 einer Pumpe 32 abdichtende Wellendurchführung aus einer im Pumpengehäuse 33 angeordneten Kammer 34, in welcher zwei eine Welle 35 umgebende Lippendichtungen 36, 37 angeordnet sind, zwischen denen ein mit Sperrflüssigkeit gefüllter Raum 38 belassen ist. Dieser ist über eine Verbindungsleitung 39 mit einem über dem Niveau der Kammer 34 angeordneten Vorratsbehälter 40 verbunden. Im Vorratsbehälter 40 befindet sich Sperrflüssigkeit 41, deren Sollfüllstand auf einen Signalgeber 42 abgestimmt ist. Über der Sperrflüssigkeit 41 befindet sich ein freier Raum 43, in welchem ein Kolben 46 angeordnet ist. Zwischen dem Kolben 46 und der Oberfläche 44 der Sperrflüssigkeit 41 ist eine die Oberfläche 44 der Sperrflüssigkeit 41 abdeckende Membran 54 aus Silikonkautschuk angeordnet, welche im Vorratsbehälter hermetisch abdichtend eingespannt ist. Der Kolben 46 besitzt bei dieser Ausführungsform geringeren Durchmesser als der Innendurchmesser des Vorratsbehälters 40 beträgt, und die Bewegbarkeit der Membran wird dadurch ermöglicht, daß sie zwischen dem Kolben 46 und der Wandung 45 eine in den Raum 43 hineinreichende Falte 55 bildet. Damit die gleichzeitige Bewegung von Kolben 46 und Membran 54 sichergestellt ist, sind beide durch Verschweißen fest miteinander verbunden. Der Kolben 46 ist mit einem aus dem Vorratsbehälter 40 herausführenden Stößel 47 ausgestattet, welcher mit einem einen Schließkontakt 48 aufweisenden Rädchen 49 des Signalgebers 42 zusammenwirkt, welcher mit dem Schließkontakt 48 betätigbare Grenzkontakte 50, 51 aufweist. Der Sollfüllstand der Sperrflüssigkeit 41 im Vorratsbehälter 40 ist so eingestellt, daß der Schließkontakt 48 von den beiden Grenzkontakten 50, 51 den gleichen Abstand besitzt. Bei Absinken des Füllstandes wird der Grenzkontakt 50 und bei Steigen des Füllstandes der Grenzkontakt 51 geschlossen, wodurch eine Alarmlampe 52 und eine akustische Warneinrichtung 53 betätigt werden.

## Patentansprüche

1. Wellendurchführung, bestehend aus zwei in einer gehäuseartigen, die Welle (5; 35) umgebende Kammer (4; 34) angeordneten Wellendichtungen (6, 7; 36, 37), zwischen denen ein mit Sperrflüssigkeit gefüllter Raum (8; 38) belassen ist, von welchem eine Verbindungsleitung (9; 39) zu einem über dem Niveau der Kammer (4; 34) angeordneten Vorratsbehälter (10; 40) führt, dadurch gekennzeichnet, daß die Oberfläche (14; 44) der im Vorratsbehälter (10; 40) enthaltenen Sperrflüssigkeit (11; 41) durch einen Kolben (16; 46) abgedeckt ist, welcher außerhalb des Vorratsbehälters (10; 40) mit einem zugeordneten Signalgeber (12; 42) zusammenwirkt, wobei der Sollfüllstand der Sperrflüssigkeit (11; 41) auf den Signalgeber (12; 42) abgestimmt ist.

2. Wellendurchführung nach Anspruch 1, dadurch gekennzeichnet, daß zwischen Kolben (46) und Oberfläche (44) der Sperrflüssigkeit (41) eine gegen die Wandung (50) des Vorratsbehälters (40) hermetisch abdichtende, durch Veränderung des Füllstandes bewegbare Membran (54) angeordnet ist, auf welcher der Kolben (46) ruht.

3. Wellendurchführung nach Anspruch 2, dadurch gekennzeichnet, daß Kolben (46) und Membran (54) fest verbunden sind.
